Europäisches Patentamt

European Patent Office

Office européen des brevets

(11) Publication number: **0 344 596**
**A2**

# (12) EUROPEAN PATENT APPLICATION

(21) Application number: **89109337.9**

(22) Date of filing: **24.05.89**

(51) Int. Cl.⁴: **F16C 39/06**

(30) Priority: **02.06.88 GB 8813020**

(43) Date of publication of application:
**06.12.89 Bulletin  89/49**

(84) Designated Contracting States:
**CH DE FR IT LI SE**

(71) Applicant: **THE GLACIER METAL COMPANY LIMITED**
**Argyle House Joel Street**
**Northwood Hills Middlesex HA6 1LN(GB)**

(72) Inventor: **Whorlow, Raymond John**
**19 Coombe Rise Saltdean**
**Brighton East Sussex BN2 8QN(GB)**

(74) Representative: **Gibson, George Kevin et al**
**Bowdon House Ashburton Road West**
**Trafford Park Manchester M17 1RA(GB)**

(54) **Magnetic thrust bearings.**

㊸ Axial magnetic bearings are described including a shaft having a thrust accepting rotor, an annular electromagnet surrounding the shaft, the electromagnet having one pole axially adjacent one radial face of the rotor and the second pole radially outwardly of the rotor periphery.

FIG.2

EP 0 344 596 A2

## Magnetic Thrust Bearings

The present invention relates to magnetic bearings for accepting axial thrust loads.

In an axial magnetic bearing the configuration is generally such that a solid, circular ferromagnetic disc, secured to a shaft, is used for the rotor of the bearing. Annular electromagnetic coils are generally sited on each side of and adjacent the disc and, depending upon the thrust direction, one or other of the electromagnets balances out thrust forces along the shaft axis. This is achieved by a control system which varies the current to the electromagnet in order to maintain a substantially constant gap between the magnet and disc face.

The diameter of the disc has generally been dictated by the magnitude of the axial load which it is necessary to counteract.

Where the anticipated rotational speed of the shaft and disc is very high and is also allied with high thrust loads the stresses generated in the rotating disc may exceed the mechanical strength of the ferromagnetic material from which it is made.

It is an object of the present invention, therefore, to provide an axial magnetic bearing assembly in which, in operation, there are lower induced stresses within the thrust bearing member, than for a conventional axial magnetic bearing assembly capable of accepting the same anticipated maxiumu thrust.

According to the present invention a magnetic bearing assembly includes a shaft having a thrust accepting rotor, of ferromagnetic material, and providing, in relation to the shaft axis, a radially extending face to accept thrusts along the shaft in one direction, and a face extending parallel to the shaft axis radially outwardly of the thrust face, and the assembly also has an electromagnet with an annular coil, and an annular ferromagnetic core, both the coil and the core being coaxial with the shaft, the arrangement being such that one pole of the electromagnet has a radially extending face opposite to, and spaced from, the thrust face of the rotor, and the other pole has a face opposite to, and spaced from, said rotor face extending parallel to the shaft axis.

Since there is little or no movement of the rotor in the radial direction the air gap or clearance between the radially outward pole and the rotor periphery may be made very small. The effect of the small clearance is to reduce the magnetic reluctance in this region which in turn reduces the power requirement of the bearing assembly. Power dissipated is governed by the square of the reluctance whereas the generated axial force is only halved due to only one of the pole-pieces generating axial thrust. Therefore, for a given axial force requirement the power supplied to the electromagnet may be reduced by a factor of two. There is an advantage in the axial bearing of the present invention, therefore, in that the power consumption to axial force may be reduced in a ratio of 2:1.

Where the electromagnet is operating at below flux saturation level the flux density may be increased to recoup some of the axial thrust capability. $\sqrt{2}$ will recoup all of the lost thrust because thrust is proportional to flux density squared. The flux density should not exceed the flux saturation level of the electromagnet.

The rotor of the bearing assembly may provide two radially extending faces, each to accept thrusts, one thrust face to accept thrusts along the shaft in said one direction, and the other thrust face to accept thrusts along the shaft in the opposite direction, and the assembly also has a second electromagnet, with at least one pole having a radially extending face opposite to, and spaced from, said other thrust face of the rotor.

In a symmetrical arrangement for such a bearing assembly, the second electromagnet has the other pole with a face opposite to, and spaced from, said rotor face extending parallel to the shaft axis, radially outwardly of the rotor thrust faces, and said other pole of the second electromagnet, and said other pole of the first electromagnet, are provided by a common portion of the cores of both electromagnets.

Due to the forces which are generated in the radial direction with any bearing assembly in accordance with the present invention it may be preferable in some circumstances to employ mechanical radial journal bearings rather than magnetic radial journal bearings.

In order that the present invention may be more fully understood examples will now be described by way of illustration only with reference to the accompanying drawings, of which:

Figure 1 shows a schematic section through a prior art axial magnetic thrust bearing;

Figure 2 shows a schematic section in elevation through an axial magnetic bearing according to the present invention;

Figure 3 shows an alternative embodiment to that of Figure 2; and

Figure 4 which shows a modification of the embodiment of Figure 2.

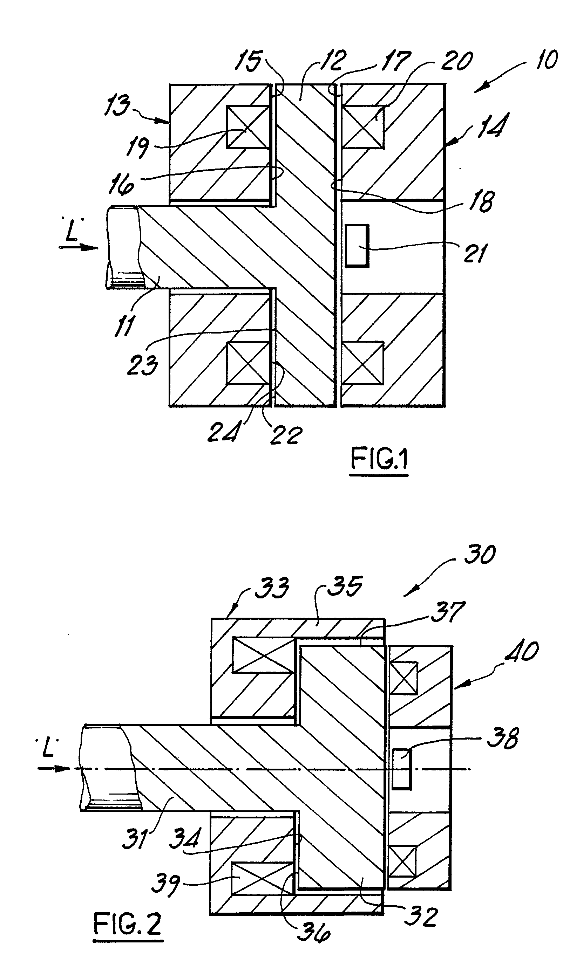

Referring now to Figure 1 where a conventional axial magnetic thrust bearing is indicated generally at 10. The bearing assembly comprises a shaft 11 which is supported by either conventional mechanical journal bearings (not shown) or radial magnetic bearings (not shown). The shaft has a rotor disc 12 which is shown at the shaft end but may be intermediate the shaft. Two stationary annular electromagnets 13 and 14 are shown. The magnets 13 and 14 comprise equal pole face areas 15, 16 and 17,18 together with annular coils 19,20. An external thrust load, "L",is applied to the shaft in the direction of the arrow. An axial position sensor 21 senses the axial position of the rotor disc 12 and via a known control system (not shown) the current to the coil 19 of the electromagnet 13 is varied to maintain the clearance 22 between the rotor face 23 and the face 24 of the electromagnet 13 substantially constant. The second electromagnet 14 only comes into operation if the direction of the applied thrust load is reversed for some reason.

The thrust capacity of the bearing is largely dictated by the face area of the electromagnets which in turn dictates the diameter of the rotor disc 12. Where both the axial thrust requirement and the rotational speeds are high the stresses generated due to the large diameter may exceed the strength of the disc material and cause it to burst.

Referring now to Figure 2 where the axial bearing assembly is shown generally at 30 and comprises a shaft 31 having a rotor 32 and an annular electromagnet 33. The electromagnet has two pole pieces 34 and 35. One pole piece 34 is axially adjacent the radial face 36 of the rotor 32 and the second pole piece 35 is radially outward of the rotor periphery 37. The shaft 31 is supported in hydrostatic plain journal bearings (not shown). The forces acting on the rotor 32 are axially to support the external load 'L' applied in the direction of the arrow and generated by the pole-piece 34; and radially, the force being generated by the pole-piece 35. An axial position sensor 38 is employed in conjunction with known control circuitry (not shown) to vary the control power applied to the coil 39 of the electromagnet 33.

A second annular electromagnet 40 may also be used where the thrust load direction may be reversed.

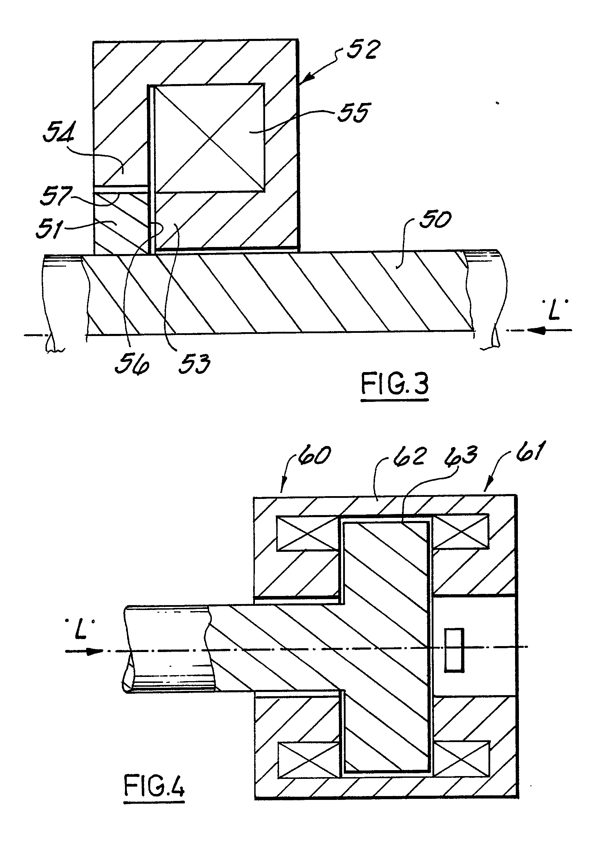

Figure 3 shows a second embodiment of the invention where a shaft 50 has a thrust collar 51 and an annular electromagnet 52 has two pole-pieces 53 and 54 and a coil 55. The pole-piece 53 is axially adjacent the radial face 56 of the thrust collar 51 whilst the second pole-piece 54 is radially outward of the periphery 57 of the collar 51.

Figure 4 shows a modification of the thrust bearing arrangement of Figure 2. The two equivalent poles of the electromagnets 60 and 61 are joined to form a common pole-piece 62 radially outwardly of the rotor periphery 63.

## Claims

1. A magnetic bearing assembly includes a shaft having a thrust accepting rotor, of ferromagnetic material, and providing, in relation to the shaft axis, a radially extending face to accept thrusts along the shaft in one direction, and the assembly also has an electromagnet with an annular coil, and an annular, ferromagnetic core, both the coil and the core being coaxial with the shaft, the arrangement being such that one pole of the electromagnet has a radially extending face opposite to, and spaced from, the thrust face of the rotor, characterised in that the rotor also has a face extending parallel to the shaft axis radially outwardly of the thrust face, and the other pole of the electromagnet has a face opposite to, and spaced from, said rotor face extending parallel to the shaft axis.

2. A bearing assembly according to Claim 1 characterised in that the rotor provides two radially extending faces each to accept thrusts, one thrust face to accept thrusts along the shaft in said one direction, and the other thrust face to accept thrusts along the shaft in the opposite direction, and the assembly also has a second electromagnet, with at least one pole having a radially extending face opposite to, and spaced from, said other thrust face of the rotor.

3. A bearing assembly according to Claim 1 characterised in that the second electromagnet has the other pole with a face opposite to, and spaced from, said rotor face extending parallel to the shaft axis, radially outwardly of the rotor thrust faces, and said other pole of the second electromagnet, and said other pole of the first electromagnet, are provided by a common portion of the cores of both electromagnets.

FIG.1

FIG.2

FIG.3

FIG.4